# EUROPEAN PATENT APPLICATION

(11) **EP 4 375 710 A1**
(43) Date of publication of application: **29.05.2024**
(21) Application number: 23206512.8
(22) Date of filing: 27.10.2023
(51) Int. Cl.: G01S 19/04, G01S 19/43

(54) **DETERMINING A LOCATION TO PLACE A BASE STATION DEVICE USED BY A ROBOTIC GARDEN TOOL**

(30) Priority: 17.11.2022 US 202263384176 P
(71) Applicant: Techtronic Cordless GP, Anderson, SC 29621 (US)
(72) Inventor: LEE, Hei Man, Kwai Chung (CN); LAI, Hok Sum Sam, Kwai Chung (CN); CHOI, Man Ho, Kwai Chung (CN); LAI, Tat Hei, Kwai Chung (CN)
(74) Representative: Novagraaf Group

(57) **Abstract**

A base station device includes a network interface including a global navigation satellite system (GNSS) receiver and an electronic processor. The electronic processor may be coupled to the network interface. The electronic processor may be configured to receive, via the GNSS receiver, a first location signal from each of a first plurality of satellites while the base station device is located at a first location. The electronic processor may also be configured to determine a first signal strength of the base station device at the first location. The first location may be a first potential location of the base station device from which the base station device is configured to provide location calibration information based on communication with the first plurality of satellites to a robotic garden tool. An indication of the first signal strength may be output via an output device for consumption by a user.

## Description

### RELATED APPLICATIONS

This application claims priority to U.S. Provisional Application No. 63/384,176, filed November 17, 2022 (Attorney Docket No. 206737-9067-US01), the entire contents of which are hereby incorporated by reference.

### FIELD

The present disclosure relates to placement of one or more base station devices used by a robotic garden tool to aid the robotic garden tool in determining its location during operation.

### SUMMARY

One embodiment includes a base station device including a network interface including a global navigation satellite system (GNSS) receiver and an electronic processor. The electronic processor may be coupled to the network interface. The electronic processor may be configured to receive, via the GNSS receiver, a first location signal from each of a first plurality of satellites while the base station device is located at a first location. The electronic processor may also be configured to determine a first signal strength of the base station device at the first location. The first location may be a first potential location of the base station device from which the base station device is configured to provide location calibration information based on communication with the first plurality of satellites to a robotic garden tool. An indication of the first signal strength may be output via an output device for consumption by a user.

In addition to any combinations of features described above, the base station device may include the output device.

In addition to any combinations of features described above, the output device may be included on an external device, and the electronic processor may be configured to transmit, via the network interface, the first signal strength to the external device for outputting via the output device.

In addition to any combinations of features described above, the electronic processor may be configured to determine the first signal strength based on a first amount of satellites of the first plurality of satellites from which respective first location signals were received by the base station device.

In addition to any combinations of features described above, the electronic processor may be configured to compare the first amount of satellites of the first plurality of satellites from which the respective first location signals were received by the base station device to a predetermined satellite amount threshold, and determine whether the first location is an adequate location for the base station device based on the comparison. The indication of the first signal strength may indicate whether the first location is an adequate location for the base station device.

In addition to any combinations of features described above, the electronic processor may be configured to receive, via the network interface, data from the robotic garden tool. The data may indicate a second amount of satellites of the first plurality of satellites from which the respective first location signals were received by the robotic garden tool. The data may indicate respective second identities of each of the satellites of the second amount of satellites. In addition to any combinations of features described above, the electronic processor may be configured to compare first identities of each of the satellites of the first amount of satellites of the first plurality of satellites from which the respective first location signals were received by the base station device to the second identities of each of the satellites of the first plurality of satellites from which the respective first location signals were received by the robotic garden tool to determine a third amount of common satellites of the first plurality of satellites from which the respective first location signals were received by both the base station device and the robotic garden tool. In addition to any combinations of features described above, the electronic processor may be configured to determine the first signal strength of the base station device at the first location based on the third amount of common satellites of the first plurality of satellites from which the respective first location signals were received by both the base station device and the robotic garden tool.

In addition to any combinations of features described above, the electronic processor may be configured to receive, via the network interface, data from one of the robotic garden tool and a second base station device. The data may indicate a second signal strength of the one of the robotic garden tool and the second base station device based on a second amount of satellites of the first plurality of satellites from which the respective first location signals were received by the one of the robotic garden tool and the second base station device. The one of the robotic garden tool and the second base station device may be located at a second location different than the first location. The second location may be a second potential location of the base station device from which the base station device is configured to provide the location calibration information to the robotic garden tool. In addition to any combinations of features described above, the electronic processor may be configured to compare the second signal strength of the one of the robotic garden tool and the second base station device at the second location to the first signal strength of the base station device at the first location. The indication may indicate whether the second signal strength of the one of the robotic garden tool and the second base station device at the second location is greater than the first signal strength of the base station device at the first location.

In addition to any combinations of features described above, the electronic processor may be configured to receive, via the GNSS receiver, a second location signal from each of a second plurality of satellites while the base station device is located at a second location different than the first location. In addition to any combinations of features described above, the electronic processor may be configured to determine a second signal strength of the base station device at the second location. The second location may be a second potential location of the base station device from which the base station device is configured to provide the location calibration information based on communication with the second plurality of satellites to the robotic garden tool. In addition to any combinations of features described above, the electronic processor may be configured to compare the second signal strength of the base station device at the second location to the first signal strength of the base station device at the first location. In addition to any combinations of features described above, the electronic processor may be configured to control the output device to indicate whether the second signal strength of the base station device at the second location is greater than the first signal strength of the base station device at the first location.

In addition to any combinations of features described above, the GNSS receiver may include a first antenna located at the first location and a second antenna located at a second location different than the first location. The first signal strength may correspond to the first signal strength of respective first location signals received by the first antenna. In addition to any combinations of features described above, the electronic processor may be configured to determine a second signal strength of the respective first location signals received by the second antenna, compare the second signal strength associated with the second antenna to the first signal strength associated with the first antenna, and provide the location calibration information to the robotic garden tool. The location calibration information may be based on the respective location signals received from one of the first antenna and the second antenna that has a greater signal strength than the other of the one of the first antenna and the second antenna.

In addition to any combinations of features described above, the electronic processor may be configured to receive, via the network interface, data from a second base station device. The data may indicate a second signal strength of the second base station device based on a second amount of satellites of the first plurality of satellites from which the respective first location signals were received by the second base station device. The second base station device may be located at a second location different than the first location. In addition to any combinations of features described above, the electronic processor may be configured to determine whether the base station device, the second base station device, or both should provide respective location calibration information to the robotic garden tool based on the first signal strength of the base station device and the second signal strength of the second base station device. In addition to any combinations of features described above, the electronic processor may be configured to compare the second signal strength of the second base station device to the first signal strength of the base station device. In addition to any combinations of features described above, the electronic processor may be configured to provide the location calibration information to the robotic garden tool. The location calibration information may be based on the respective location signals received from one of the first antenna and the second antenna that has a greater signal strength than the other of the one of the first antenna and the second antenna.

Another embodiment includes an external device including a network interface including a global navigation satellite system (GNSS) receiver, an output device, and an electronic processor coupled to the network interface and to the output device. The electronic processor configured to receive, via the GNSS receiver, a first location signal from each of a first plurality of satellites while the external device is located at a first location. The electronic processor configured to determine a first signal strength of the external device at the first location. The first location is a first potential location of a base station device configured to provide location calibration information based on communication with the first plurality of satellites to a robotic garden tool. The electronic processor also configured to control the output device to output an indication of the first signal strength.

In addition to any combinations of features described above, the electronic processor may be configured to determine the first signal strength based on a first amount of satellites of the first plurality of satellites from which respective first location signals were received by the external device.

In addition to any combinations of features described above, the electronic processor may be configured to compare the first amount of satellites of the first plurality of satellites from which the respective first location signals were received by the external device to a predetermined satellite amount threshold, and determine whether the first location is an adequate location for the base station device based on the comparison. The indication of the first signal strength may indicate whether the first location is an adequate location for the base station device.

In addition to any combinations of features described above, the electronic processor may be configured to receive, via the network interface, data from the robotic garden tool. The data may indicate a second amount of satellites of the first plurality of satellites from which the respective first location signals were received by the robotic garden tool. The data may indicate respective second identities of each of the satellites of the second amount of satellites. In addition to any combinations of features described above, the electronic processor may be configured to compare first identities of each of the satellites of the first amount of satellites of the first plurality of satellites from which the respective first location signals were received by the external device to the second identities of each of the satellites of the first plurality of satellites from which the respective first location signals were received by the robotic garden tool to determine a third amount of common satellites of the first plurality of satellites from which the respective first location signals were received by both the external device and the robotic garden tool. In addition to any combinations of features described above, the electronic processor may be configured to determine the first signal strength of the external device at the first location based on the third amount of common satellites of the first plurality of satellites from which the respective first location signals were received by both the external device and the robotic garden tool.

In addition to any combinations of features described above, the electronic processor may be configured to receive, via the network interface, data from the base station device. The data may indicate a second signal strength of the base station device based on a second amount of satellites of the first plurality of satellites from which the respective first location signals were received by the base station device. The base station device may be located at a second location different than the first location. The second location may be a second potential location of the base station device from which the base station device is configured to provide the location calibration information to the robotic garden tool. In addition to any combinations of features described above, the electronic processor may be configured to compare the second signal strength of the base station device at the second location to the first signal strength of the external device at the first location, and control the output device to indicate whether the second signal strength of the base station device at the second location is greater than the first signal strength of the external device at the first location.

In addition to any combinations of features described above, the electronic processor may be configured to receive, via the GNSS receiver, a second location signal from each of a second plurality of satellites while the external device is located at a second location different than the first location. In addition to any combinations of features described above, the electronic processor may be configured to determine a second signal strength of the external device at the second location. The second location may be a second potential location of the base station device from which the base station device is configured to provide the location calibration information based on communication with the second plurality of satellites to the robotic garden tool. In addition to any combinations of features described above, the electronic processor may be configured to compare the second signal strength of the external device at the second location to the first signal strength of the external device at the first location, and control the output device to indicate whether the second signal strength of the external device at the second location is greater than the first signal strength of the external device at the first location.

Another embodiment includes a method of controlling a base station device. The method may include receiving, with an electronic processor of the base station device via a global navigation satellite system (GNSS) receiver of a network interface of the base station device, a first location signal from each of a first plurality of satellites while the base station device is located at a first location. The method may also include determining, with the electronic processor, a first signal strength of the base station device at the first location. The first location may be a first potential location of the base station device from which the base station device is configured to provide location calibration information based on communication with the first plurality of satellites to a robotic garden tool. An indication of the first signal strength may be output via an output device for consumption by a user.

In addition to any combinations of features described above, the method may include transmitting, with the electronic processor via the network interface, the first signal strength to an external device for outputting via the output device. The output device may be included on the external device.

In addition to any combinations of features described above, the method my include determining, with the electronic processor, the first signal strength based on a first amount of satellites of the first plurality of satellites from which respective first location signals were received by the base station device. In addition to any combinations of features described above, the method may include comparing, with the electronic processor, the first amount of satellites of the first plurality of satellites from which the respective first location signals were received by the base station device to a predetermined satellite amount threshold. In addition to any combinations of features described above, the method may include determining, with the electronic processor, whether the first location is an adequate location for the base station device based on the comparison. The indication of the first signal strength may indicate whether the first location is an adequate location for the base station device.

In addition to any combinations of features described above, the method may include receiving, with the electronic processor via the network interface, data from one of the robotic garden tool and a second base station device. The data may indicate a second signal strength of the one of the robotic garden tool and a second base station device based on a second amount of satellites of the first plurality of satellites from which the respective first location signals were received by the one of the robotic garden tool and a second base station device. The one of the robotic garden tool and a second base station device may be located at a second location different than the first location. The second location may be a second potential location of the base station device from which the base station device is configured to provide the location calibration information to the robotic garden tool. In addition to any combinations of features described above, the method may include comparing, with the electronic processor, the second signal strength of the one of the robotic garden tool and the second base station device at the second location to the first signal strength of the base station device at the first location. The indication may indicate whether the second signal strength of the one of the robotic garden tool and the second base station device at the second location is greater than the first signal strength of the base station device at the first location.

Other aspects of the disclosure will become apparent by consideration of the detailed description and accompanying drawings.

### BRIEF DESCRIPTION OF THE DRAWINGS

FIG. 1A illustrates a communication system including a robotic garden tool according to some example embodiments.
FIG. 1B illustrates an example implementation of the communication system of FIG. 1A according to some example embodiments.
FIG. 1C illustrates a bottom perspective view of the robotic garden tool of FIG. 1A according to some example embodiments.
FIG. 2 is a block diagram of the robotic garden tool of FIGS. 1A and 1B according to some example embodiments.
FIG. 3 is a block diagram of the external device of FIG. 1A according to some example embodiments.
FIG. 4 is a block diagram of the base station device of FIG. 1A according to some example embodiments.
FIG. 5 illustrates a flowchart of a method that may be performed by the first base station device and/or the external device of FIG. 1A to determine a location to place the base station device according to some example embodiments.
FIG. 6 illustrates an example use case of execution of the method of FIG. 5 to determine a location to place the base station device according to some example embodiments.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling. Further, "connected" and "coupled" are not restricted to physical or mechanical connections or couplings, and can include electrical connections or couplings, whether direct or indirect.

It should be noted that a plurality of hardware and software based devices, as well as a plurality of different structural components may be utilized to implement the invention. Furthermore, and as described in subsequent paragraphs, the specific configurations illustrated in the drawings are intended to exemplify embodiments of the invention and that other alternative configurations are possible. The terms "processor," "central processing unit," and "CPU" are interchangeable unless otherwise stated. Where the terms "processor" or "central processing unit" or "CPU" are used as identifying a unit performing specific functions, it should be understood that, unless otherwise stated, those functions can be carried out by a single processor, or multiple processors arranged in any form, including parallel processors, serial processors, tandem processors or cloud processing/cloud computing configurations.

Throughout this application, the term "approximately" may be used to describe the dimensions of various components and/or paths of travel of a robotic garden tool. In some situations, the term "approximately" means that the described dimension is within 1% of the stated value, within 5% of the stated value, within 10% of the stated value, or the like. When the term "and/or" is used in this application, it is intended to include any combination of the listed components. For example, if a component includes A and/or B, the component may include solely A, solely B, or A and B.

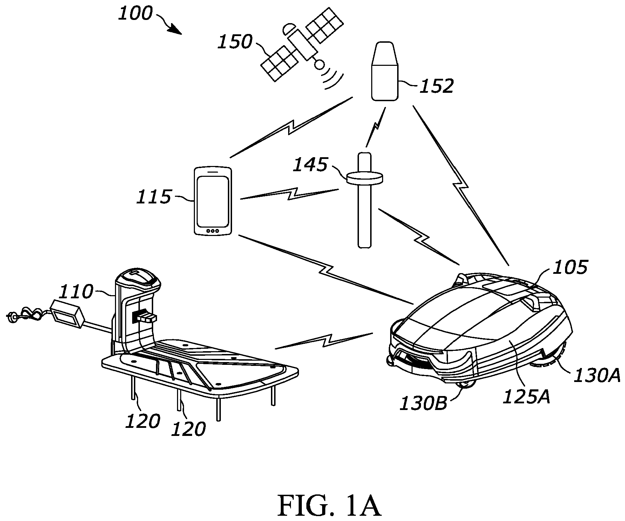

FIG. 1A illustrates a communication system 100 that may include a robotic garden tool 105 (e.g., a robotic lawn mower 105 that may also be referred to as a robotic mower 105), a docking station 110 for the robotic mower 105, an external device 115, a base station 145, a satellite 150, and a server 152 according to some example embodiments. The robotic garden tool 105 is primarily described as being a robotic mower 105. However, in other embodiments, the robotic garden tool 105 may include a tool for sweeping debris, vacuuming debris, clearing debris, collecting debris, moving debris, etc. Debris may include plants (such as grass, leaves, flowers, stems, weeds, twigs, branches, etc., and clippings thereof), dust, dirt, jobsite debris, snow, and/or the like. For example, other implementations of the robotic garden tool 105 may include a vacuum cleaner, a trimmer, a string trimmer, a hedge trimmer, a sweeper, a cutter, a plow, a blower, a snow blower, etc.

In some embodiments, a lawn may include any type of property that includes grass, a crop, some other material to be trimmed, cleared, gathered, etc., and/or that includes some material to receive treatment from the robotic garden tool (e.g., fertilizer to treat grass in the lawn). In some embodiments, a lawn may include paved portions of a property (e.g., a driveway), for example, when the robotic garden tool is used for snow plowing/removal.

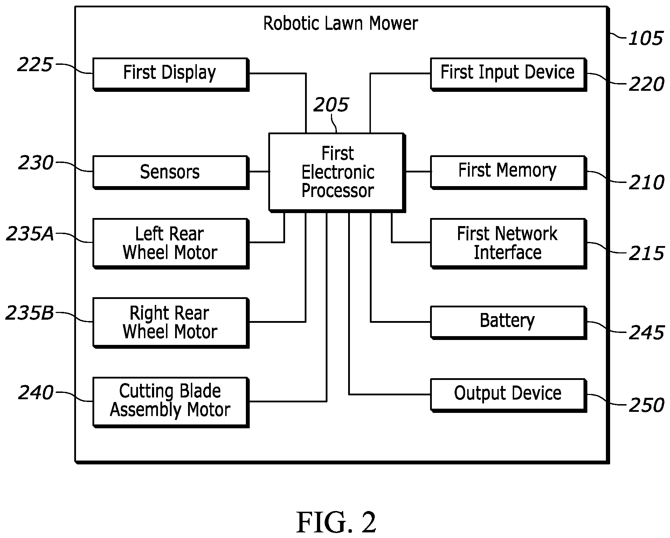

In some embodiments, the docking station 110 may be installed in a yard/lawn using stakes 120. The robotic mower 105 may be configured to mow the yard and dock at the docking station 110 in order to charge a battery 245 of the robotic mower 105 (see FIG. 2). In some embodiments, the docking station 110 is configured to make an electrical connection with a power supply (e.g., via a cord and plug connected to a wall outlet that is connected to a power grid) in order to provide charging current to the robotic mower 105 when the robotic mower 105 is electrically coupled with the docking station 110.

In some embodiments, the docking station 110 may also be electrically connected to a boundary cable (i.e., boundary wire). In some embodiments, the docking station 110 provides power to the boundary cable to control the boundary cable to provide/emit, for example, an electromagnetic signal that may be detected by the robotic mower 105 such that the robotic mower 105 can control itself to stay within an operating area 155 defined by the boundary cable. In some embodiments, the robotic mower 105 does not operate in conjunction with a boundary cable. Rather, the robotic mower 105 may include mapping capabilities, positioning tracking capabilities, and/or the like that allow the robotic mower 105 to remain within a predefined boundary (e.g., a virtual boundary) without the use of the boundary cable. In some embodiments, the robotic mower 105 may determine its location (and/or may aid in allowing the base station device 145 and/or the external device 115 to determine their respective locations) by communicating with other devices such as the base station device 145 and/or the satellite(s) 150 as described in detail below. For example, the robotic mower 105 and the base station device 145 may communicate with each other using a radio frequency (RF) communication protocol (e.g., WiFi^{™}, Bluetooth^{™}, Bluetooth^{™} Low Energy (BLE), and/or the like).

In some embodiments, the docking station 110 includes a docking cable loop, a magnet configured to be sensed by a magnetic sensor of the robotic mower 105, and/or another transmitting device configured to emit a docking signal that may be detected by the robotic mower 105. For example, the docking signal may indicate that the robotic mower 105 is near the docking station 110 and may allow the robotic mower 105 to take certain actions in response thereto to, for example, dock the robotic mower 105 at the docking station 110.

As indicated in FIG. 1A, in some embodiments, the robotic mower 105 is configured to wirelessly communicate with the external device 115 and/or the base station device 145 when the robotic mower 105 is within communication range of the external device 115 and/or the base station device 145 (e.g., via Bluetooth^{™}, WiFi^{™}, or the like). The external device 115 may be, for example, a smart phone (as illustrated), a laptop computer, a tablet computer, a personal digital assistant (PDA), a wireless communication router that allows another external device 115 that is located remotely from the robotic mower 105 to communicate with the robotic mower 105, or another electronic device capable of communicating with the robotic mower 105. The external device 115 may generate a user interface and allow a user to access and interact with robotic mower information. The external device 115 may receive user inputs to determine operational parameters/instructions for the robotic mower 105, enable or disable features of the robotic mower 105, and the like. In some embodiments, the communication between the external device 115 and the robotic mower 105 may be wired (e.g., via a Universal Serial Bus (USB) cord configured to connect to respective USB ports of the external device 115 and the robotic mower 105).

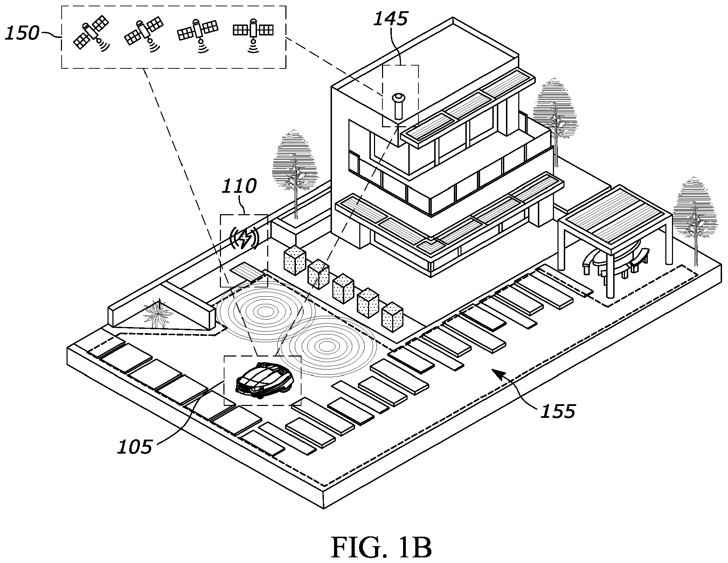

In some embodiments, the base station device 145 is considered an external device 115. The base station device 145 may be placed in a stationary manner at a base station location to aid the robotic mower 105 in determining a current location of the robotic mower 105 as the robotic mower 105 moves within an operating area 155 as described in greater detail below. For example, the base station device 145 may be placed on a roof of a building adjacent to an operating area 155 where the robotic mower 105 performs a task (see FIG. 1B). As other examples, the base station device 145 may be located at a different location on a building or at a location within or near the operating area 155 (e.g., at the same location as the charging station 110, on a pole/stake that is inserted into the ground within or near the operating area 155, or the like). While the base station device 145 may be configured to remain stationary during operation of the robotic mower 105 within the operating area 155, in some embodiments, the base station device 145 may be removed from the base station location to define or revise a virtual boundary, to change the base station location when the robotic mower 105 is not operating, to determine a more useful/optimum location for the base station device 145 based on signal strength determinations as described in greater detail below, and/or the like.

As indicated by FIGS. 1A and 1B, in some embodiments, the robotic mower 105, the external device 115, and/or the base station device 145 are configured to wirelessly and bidirectionally communicate with each other and/or one or more satellites 150 and/or one or more servers 152. For example, the robotic mower 105, the external device 115, and/or the base station device 145 may include a global positioning system (GPS) receiver configured to communicate with one or more satellites 150 to determine a location of the respective robotic mower 105, the external device 115, and/or the base station device 145. As another example, the robotic mower 105, external device 115, and/or base station device 145 may transmit information to and/or receive information from the server 152, for example, over a cellular network. Additional details of communication between (i) the robotic mower 105, the external device 115, and/or the base station device 145 and (ii) the one or more satellites 150 and/or the one or more servers 152 are described below. While FIG. 1A illustrates one satellite 150 and one server 152, in some embodiments, the communication system 100 includes additional satellites 150 and/or servers 152. In some embodiments, the communication system 100 may not include any servers 152.

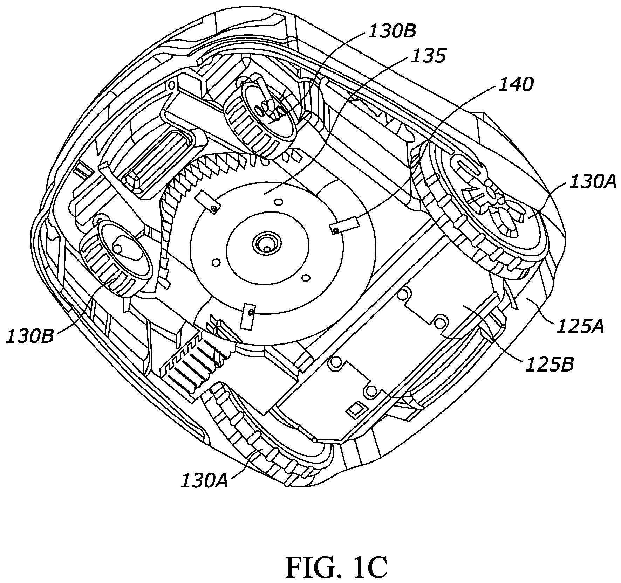

FIG. 1C illustrates a bottom perspective view of the robotic mower 105 according to some example embodiments. The robotic mower 105 may include a housing 125 that may include an outer housing 125A (i.e., outer housing shell) and an inner housing 125B. The outer housing 125A may be coupled to the inner housing 125B. The robotic mower 105 also may include wheels 130 (i.e., a set of wheels 130) coupled to the inner housing 125B and configured to rotate with respect to the housing 125 to propel the robotic mower 105 on an operating surface (e.g., a yard to be mowed). The wheels 130 may include motor-driven wheels 130A and non-motor-driven wheels 130B. In the embodiment shown in FIG. 1B, two rear wheels 130A are motor-driven wheels 130A while two front wheels 130B are non-motor-driven wheels 130B. In other embodiments, the robotic mower 105 may include a different wheel arrangement (e.g., a different number of total wheels, a different number of each type of wheel, different wheels being motor-driven or non-motor-driven, and/or the like). In some embodiments, the housing 125 may not include the outer housing 125A and the inner housing 125B. Rather, the housing 125 may include a single integrated body/housing to which the wheels 130 are attached.

In some embodiments, the robotic mower 105 includes a wheel motor 235 (see FIG. 2) coupled to one or more wheels 130 and configured to drive rotation of the one or more wheels 130. In some embodiments, the robotic mower 105 includes multiple wheel motors 235 where each wheel motor 235 is configured to drive rotation of a respective motor-driven wheel 130A (see FIG. 2).

In some embodiments, the robotic mower 105 includes a cutting blade assembly 135 coupled to the inner housing 125B and configured to rotate with respect to the housing 125 to cut grass on the operating surface. The cutting blade assembly 135 may include a rotating disc to which a plurality of cutting blades 140 configured to cut the grass are attached. In some embodiments, the robotic mower 105 includes a cutting blade assembly motor 240 (see FIG. 2) coupled to the inner housing 125B and to the cutting blade assembly 135. The cutting blade assembly motor 240 may be configured to drive rotation of the cutting blade assembly 135 to cut the grass on the operating surface.

In some embodiments, the robotic mower 105 and/or the docking station 110 include additional components and functionality than is shown and described herein.

FIG. 2 is a block diagram of the robotic mower 105 according to some example embodiments. In the embodiment illustrated, the robotic mower 105 includes a first electronic processor 205 (for example, a microprocessor or other electronic device). The first electronic processor 205 includes input and output interfaces (not shown) and is electrically coupled to a first memory 210, a first network interface 215, an optional first input device 220, an optional display 225, one or more sensors 230, a left rear wheel motor 235A, a right rear wheel motor 235B, a cutting blade assembly motor 240, a battery 245, and a first output device 250. In some embodiments, the robotic mower 105 includes fewer or additional components in configurations different from that illustrated in FIG. 2. For example, the robotic mower 105 may not include the first input device 220 and/or the first display 225. As another example, the robotic mower 105 may include a height adjustment motor configured to adjust a height of the cutting blade assembly 135. As yet another example, the robotic mower 105 may include additional sensors or fewer sensors than the sensors 230 described herein. In some embodiments, the robotic mower 105 performs functionality other than the functionality described below.

The first memory 210 may include read only memory (ROM), random access memory (RAM), other non-transitory computer-readable media, or a combination thereof. The first electronic processor 205 is configured to receive instructions and data from the first memory 210 and execute, among other things, the instructions. In particular, the first electronic processor 205 executes instructions stored in the first memory 210 to perform the methods described herein.

The first network interface 215 is configured to send data to and receive data from other devices in the communication system 100 (e.g., the external device 115, the base station 145, the satellite 150, and/or the server 152). In some embodiments, the first network interface 215 includes one or more transceivers for wirelessly communicating with the external device 115, the docking station 110, and/or the base station device 145 (e.g., a first RF transceiver configured to communicate via Bluetooth^{™}, WiFi^{™}, or the like). The first network interface 215 may include an additional transceiver for wirelessly communicating with the server 152 via, for example, cellular communication. The first network interface 215 may also include a first GPS receiver (e.g., a first real-time kinematic global navigating satellite systems (RTK GNSS) receiver) configured to receive a location signal from one or more satellites 150. In some embodiments, at least some of the transceivers and/or receivers of the robotic mower 105 may be combined or share some elements (e.g., an antenna and/or other hardware). Alternatively or additionally, the first network interface 215 may include a connector or port for receiving a wired connection to the external device 115, such as USB cable.

The first user input device 220 is configured to allow the first electronic processor 205 to receive a user input from a user to, for example, set/adjust an operational parameter of the robotic mower 105. The first display 225 is configured to display a user interface to the user. Similar to the user interface of the external device 115 described previously herein, the user interface displayed on the first display 225 may allow the user to access and interact with robotic mower information. In some embodiments, the first display 225 may also act as the first input device 220. For example, a touch sensitive input interface may be incorporated into the first display 225 to allow the user to interact with content provided on the first display 225. The first display 225 may be a liquid crystal display (LCD) screen, an organic light emitting display (OLED) display screen, or an E-ink display. In some embodiments, the first display 225 includes future-developed display technologies.

In some embodiments, the first electronic processor 205 is in communication with a plurality of sensors 230 that may include electromagnetic field sensors, radio frequency sensors (e.g., radio frequency identification (RFID) interrogators/sensors), Hall sensors, other magnetic sensors, the first network interface 215, and/or the like.

In some embodiments, the inner housing 125B includes at least two boundary cable sensors in the form of electromagnetic field sensors configured to detect an electromagnetic signal being emitted by the boundary cable. For example, the electromagnetic field sensors may be able to detect a strength and/or a polarity of the electromagnetic signal from the boundary cable.

In some embodiments, the inner housing 125B includes an odometry sensor (e.g., one or more Hall sensors or other types of sensors) for each motor-driven wheel 130A. Data from the odometry sensors may be used by the first electronic processor 205 to determine how far each wheel 130A has rotated and/or how fast each wheel is rotating in order to accurately control movement (e.g., turning capabilities) of the robotic mower 105. For example, the first electronic processor 205 may control the robotic mower 105 to move in an approximately straight line by controlling both of the wheel motors 235A and 235B to rotate at approximately the same speed. As another example, the first electronic processor 205 may control the robotic mower 105 to turn and/or pivot in a certain direction by controlling one of the wheel motors 235A or 235B to rotate faster than or in an opposite direction than the other of the wheel motors 235A or 235B. Similarly, rotating only one of the wheel motors 235A or 235B while the other wheel motor 235A or 235B is not rotated should result in the robotic mower 105 turning/pivoting.

In some embodiments, the inner housing 125B includes a cutting blade assembly motor sensor (e.g., one or more Hall sensors or other types of sensors). Data from the cutting blade assembly motor sensor may be used by the first electronic processor 205 to determine how fast the cutting blade assembly 135 is rotating.

In some embodiments, the battery 245 provides power to the first electronic processor 205 and to other components of the robotic mower 105 such as the motors 235A, 235B, 240 and the first display 225. In some embodiments, power may be supplied to other components besides the first electronic processor 205 through the first electronic processor 205 or directly to the other components. In some embodiments, when power is provided directly from the battery 245 to the other components, the first electronic processor 205 may control whether power is provided to one or more of the other components using, for example, a respective switch (e.g., a field-effect transistor) or a respective switching network including multiple switches. In some embodiments, the robotic mower 105 includes active and/or passive conditioning circuitry (e.g., voltage step-down controllers, voltage converters, rectifiers, filters, etc.) to regulate or control the power received by the components of the robotic mower 105 (e.g., the first electronic processor 205, the motors, 235A, 235B, 240, etc.) from the battery 245. In some embodiments, the battery 245 is a removable battery pack. In some embodiments, the battery 245 is configured to receive charging current from the docking station 110 when the robotic mower 105 is docked at the docking station 110 and electrically connected thereto.

In some embodiments, the first output device 250 provides an indication of signal strength to a user. Although shown as a separate component in FIG. 2, the first output device 250 may include the first display 225. The first output device may also include one or more light emitting diodes (LEDs), a speaker, a haptic device, or combinations thereof.

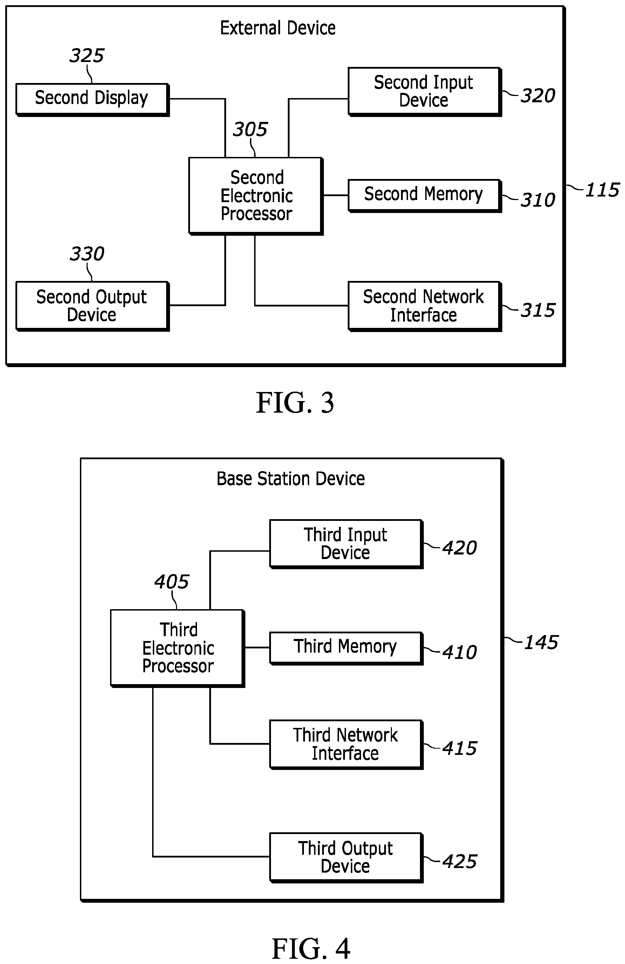

FIG. 3 is a block diagram of the external device 115 according to some example embodiments. In the example shown, the external device 115 includes a second electronic processor 305 electrically connected to a second memory 310, a second network interface 315, a second user input device 320, a second display 325, and a second output device 330. These components are similar to the like-named components of the robotic mower 105 explained above with respect to FIG. 2 and function in a similar manner as described above. For example, the second display 325 may also function as an input device (e.g., when the second display 325 is a touchscreen). In some embodiments, the second network interface 315 includes one or more transceivers for wirelessly communicating with the robotic mower 105 (e.g., a second RF transceiver configured to communicate via Bluetooth^{™}, WiFi^{™}, or the like). The second network interface 315 may include an additional transceiver for wirelessly communicating with the server 152 via, for example, cellular communication. The second network interface 315 may also include a second GPS receiver (e.g., a second RTK GNSS receiver) configured to receive a location signal from one or more satellites 150. In some embodiments, at least some of the transceivers and/or receivers of the external device 115 may be combined or share some elements (e.g., an antenna and/or other hardware). In some embodiments, the second electronic processor 305 sends data to and receives data from the robotic mower 105 and/or other devices of the communication system 100 via the second network interface 315. In some embodiments, the second output device 330 provides an indication of signal strength to a user. Although shown as a separate component in FIG. 3, the second output device 330 may include the second display 325. The second output device may also include one or more LEDs, a speaker, a haptic device, or combinations thereof.

In some embodiments, the external device 115 includes fewer or additional components in configurations different from that illustrated in FIG. 3. For example, the external device 115 may include a battery, a camera, or the like. In some embodiments, the external device 115 performs functionality other than the functionality described below.

FIG. 4 is a block diagram of the base station device 145 according to some example embodiments. In the example shown, the base station device 145 includes a third electronic processor 405 electrically connected to a third memory 410, a third network interface 415, a third user input device 420, and a third output device 425. These components are similar to the like-named components of the robotic mower 105 explained above with respect to FIG. 2 and function in a similar manner as described above. In some embodiments, the third network interface 415 includes one or more transceivers for wirelessly communicating information (e.g., calibration information) to the robotic mower 105 (e.g., a third RF transceiver configured to communicate via Bluetooth^{™}, WiFi^{™}, or the like) to aid the robotic mower 105 in determining a current location of the robotic mower 105 during a mowing operation as explained in greater detail below. The third network interface 415 may include an additional transceiver for wirelessly communicating with the server 152 via, for example, cellular communication. The third network interface 415 may also include a third GPS receiver (e.g., a third RTK GNSS receiver) configured to receive a location signal from one or more satellites 150. In some embodiments, at least some of the transceivers and/or receivers of the base station 145 may be combined or share some elements (e.g., an antenna and/or other hardware). In some embodiments, the third electronic processor 405 sends data to and receives data from the robotic mower 105 and/or other devices of the communication system 100 via the third network interface 415. In some embodiments, the third input device 420 is a button or switch configured to be actuated by a user. In some embodiments, the third output device 425 provides an indication of signal strength to a user. The third output device 425 may include a display/screen, one or more LEDs, a speaker, a haptic device, or combinations thereof.

In some embodiments, the base station device 145 includes fewer or additional components in configurations different from that illustrated in FIG. 4. For example, the base station device 145 may include a battery, a display or indicator (e.g., a light emitting diode) to provide information to the user, or the like. As another example, the base station device 145 may not include the input device 420 in some embodiments. In some embodiments, the base station device 145 performs functionality other than the functionality described below.

In some embodiments, the satellite 150 and the server 152 include similar elements as the elements described above with respect to the devices 105, 115, and 145 that function in a similar manner. For example, the satellite 150 and the server 152 may each include an electronic processor, a memory, and a network interface, among other elements.

In some embodiments, the robotic mower 105 travels within a virtual boundary of the operating area 155 to execute a task (e.g., mowing a lawn). The robotic mower 105 may travel randomly within the operating area 155 defined by the virtual boundary. For example, the robotic mower 105 may be configured to travel in an approximate straight line until the robotic mower 105 determines that it has reached the virtual boundary. In response to detecting the virtual boundary, the robotic mower 105 may be configured to turn in a random direction and continue traveling in an approximate straight line along a new path until the robotic mower 105 again determines that it has reached the virtual boundary, at which point this process repeats. In some embodiments, the robotic mower 105 may travel in a predetermined pattern within the operating area 155 defined by the virtual boundary (e.g., in adjacent rows or columns between sides of the virtual boundary) to more efficiently and evenly mow the lawn within the operating area 155. In such embodiments, the robotic mower 105 may determine and keep track of its current location within the operating area 155.

For example, as indicated in FIGS. 1A and 1B, the robotic mower 105, the base station device 145, and/or the external device 115 may be configured to communicate with each other and with one or more satellites 150. In some embodiments, the robotic mower 105, the base station device 145, and/or the external device 115 may each include an RTK GNSS receiver. During a mowing operation, as the robotic mower 105 moves within the operating area 155, the robotic mower 105 may determine its current location based on a location signal received, via its RTK GNSS receiver, from the one or more satellites 150 and based on calibration information received from the robotic mower 105 and/or the external device 115 regarding the same location signal received by the RTK GNSS receiver of the base station device 145.

For example, during a mowing operation, the base station device 145 may be stationary (i.e., acting as a stationary base station) while the robotic mower 105 moves within the operating area 155. Both the robotic mower 105 and the base station device 145 may receive one or more location signals from one or more satellites 150. The base station device 145 may determine calibration information regarding the received location signal such as phase information of the location signal received by the base station device 145. The base station device 145 may transmit the calibration information to the robotic mower 105 that received the same one or more location signals from the one or more satellites 150. The robotic mower 105 may then compare the phase information of the location signal received by the base station device 145 with the phase information of the location signal received by the robotic mower 105 to aid the robotic mower 105 in determining the current location of the robotic mower 105 (e.g., using RTK GNSS principles). Accordingly, the stationary base station device 145 provides a reference for the robotic mower 105 to more accurately determine the location of the robotic mower 105 than if the robotic mower 105 determined its location based solely on the location signal received from the one or more satellites 150. More accurately determining the location of the robotic mower 105 allows the robotic mower 105 to better navigate itself within the operating area 155 (e.g., within or along a virtual boundary).

In some instances, in order for RTK GNSS principles to be used to locate an object (e.g., the robotic mower 105), two different objects (e.g., the robotic mower 105 and the base station device 145) should receive location signals from at least a first amount of common satellites (e.g., from at least four common satellites). In some instances, location signals from uncommon satellites are not useful because these uncommon location signals cannot be compared to yield relative distance information between the two different devices. In some instances, receiving location signals from less than the first amount of common satellites does not allow RTK GNSS principles to be used to determine a location of an object. Accordingly, placement of the base station device 145 within or near the operating area 155 may be important to ensure that the base station device 145 has an adequate signal strength to provide location calibration information to the robotic mower 105 to allow the robotic mower 105 to use RTK GNSS principles to precisely determine the location of the robotic mower 105 during operation. Accordingly, there is a technological problem involving placement of a base station device 145 to be used by a robotic mower 105 to determine its location.

The systems, methods, and devices described herein address the above-noted technological problem by using a GNSS transceiver of one or more devices in the system 100 to determine a signal strength at one or more locations and output a signal strength indication. The systems, methods, and devices described herein use the robotic mower 105, the base station 145, external device 115, or a combination thereof to identify locations associated with a sufficient and insufficient signal strength for use of RTK GNSS principles and provide an output of such signal strength to a user. Embodiments described herein include a user-friendly and efficient robotic mower system set-up/initialization method that enables the user to place the base station device 145 in a location that allows RTK GNSS principles to be used by the robotic mower 105 to locate itself during operation.

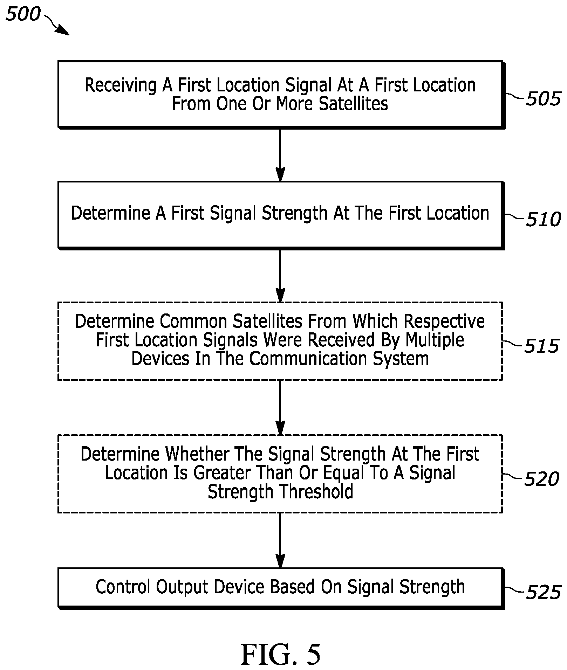

FIG. 5 illustrates a flowchart of a method 500 that may be performed by the second electronic processor 305 of the external device 115 and/or the third electronic processor 405 of the base station device 145) to determining a signal strength associated with locations of devices of the communication system 100 that are potential locations of the base station device 145 during operation of the robotic mower 105. While a particular order of processing steps, signal receptions, and/or signal transmissions is indicated in FIG. 5 as an example, timing and ordering of such steps, receptions, and transmissions may vary where appropriate without negating the purpose and advantages of the examples set forth in detail throughout the remainder of this disclosure. The explanation below refers primarily to the external device 115 (e.g., when the external device includes an RTK GNSS receiver) and/or the base station device 145 as the device(s) that perform steps of the method 500 in order to determine a signal strength at one or more locations. However, in some embodiments, the robotic mower 105 and/or a second base station device 145 may be involved in the execution of the method 500 to determine and/or compare signal strength at various locations.

In some instances, the method 500 may be performed with any device that includes an RTK GNSS receiver and that includes an output device (or is in communication with a device that includes an output device to provide an indication of the signal strength determined based on location signals received by the RTK GNSS receiver. Additionally, in situations that involve more than one device as described below, any two devices with RTK GNSS receivers may be interchangeably used to perform the functions. In situations where one or more of such devices do not include an output device, the one or more devices may transmit signal strength indication information to a device (e.g., the external device 115) that includes an output device to provide the signal strength indication information to the user.

In some instances, the method 500 is performed by a device (e.g., the base station device 145 and/or the external device 115) that is being moved to different locations by a user during an initial set-up process to determine a signal strength of the RTK GNSS receiver at each location. Once one or more adequate or highest signal strengths are determined, the user may decide to place the base station device 145 at such adequate or highest signal strength location in a stationary manner to allow the base station device 145 to provide location calibration information to the robotic mower 105 during operation as explained previously herein.

At block 505, the third electronic processor 405 of the base station device 145 receives a first location signal from each of a plurality of satellites 150 while the base station device 145 is located at a first location. In such embodiments, the base station device 145 may be the device that is being moved to different locations by the user during the initial set-up process. In some embodiments, the first location is a first potential location of the base station device 145 from which the base station device 145 is configured to provide location calibration information to the robotic mower 105 based on communication with the first plurality of satellites 150 after the initial set-up process is complete (i.e., after the base station device 145 is installed in a stationary location with adequate signal strength). The first location may be adjacent to the operating area 155 or within the operating area 155. For example, an RTK GNSS receiver of the third network interface 415 may receive the first location signals and provide the first location signals to the third electronic processor 405. In some embodiments, the first location signals include a continuous signal transmitted by the satellites 150 for receipt by one or more devices that include an RTK GNSS receiver. In some embodiments, the first location signals includes periodic transmissions of multiple separate signals. In some embodiments, each of the first location signals includes an identifier associated with the respective satellite 150 that transmitted the first location signal.

In some embodiments, the third electronic processor 405 uses the first location signal to determine a current location of the base station device 145. For example, the third electronic processor 405 may determine the amount of time that it took for the location signal to travel from the satellite 150 to the base station device 145. In some embodiments, multiple satellites 150 each transmit a location signal that is received by the base station device 145. This averaging may increase the reliability of the location determination by the third electronic processor 405, especially when the base station 145 is stationary. In some embodiments, the third electronic processor 405 may determine the location of the base station 145 by additionally or alternatively averaging multiple location signals received from a respective satellite 150 over a time period. This additional or alternative time averaging may increase the reliability of the location determination by the third electronic processor 405, especially when the base station 145 is stationary.

In embodiments where the external device 115 includes an RTK GNSS receiver and is the device being moved to different locations by the user during the initial set-up process, the second electronic processor 305 of the external device 115 receives the first location signals from each of the plurality of satellites 150 while the base station device 145 is located at the first location (at block 505). As discussed above, an RTK GNSS receiver of the second network interface 315 may receive the first location signal and provide the first location signal to the second electronic processor 305. In some embodiments, the robotic mower 105 and/or a second base station device 145 performs the same functions as the base station 145 and the external device 115 with respect to receiving first location signals from the satellites 150. In situations in which two devices in the communication system 100 receive first location signals, the first location signals received by one device may be the same location signals received by the other device except that there may be a phase difference between the two received location signals based on the difference in location between the two devices as explained previously herein. However, the phase difference may not be used during the initial set-up process because, during the initial set-up process, the devices in the system 100 may not be concerned with relative distance to each other. Rather, the devices in the system 100 may merely be concerned with an amount of satellites 150 from which location signals are received and/or an amount of common satellites 150 from which common location signals are received (i.e., a signal strength of a device at one or more locations).

At block 510, the electronic processor 305, 405 of the device 145, 115 receiving the first location signals determines a first signal strength of the device 145, 115 at the first location. In some embodiments, the first signal strength is determined based on a number/amount of the plurality of satellites 150 from which respective first location signals were received by the device 145, 115. In such embodiments, the electronic processor 305, 405 may assign a signal strength level to the first location of the device 145, 115. For example, when first location signals are received from less than four (4) satellites 150, the signal strength of the device 145, 115 at the first location may be "low." When first location signals are received from between four (4) and seven (7) satellites 150, the signal strength of the device 145, 115 at the first location may be "medium." When first location signals are received from eight (8) or more satellites, the signal strength of the device 145, 115 at the first location may be "high." In some instances, the signal strength may also take into account the magnitude of an electric field at a reference point, which is located at a significant distance from the transmitting antenna. For example, the signal strength may include the Received Signal Strength Indicator (RSSI) of each individual received location signal from each of the plurality of satellites 150. Therefore, if some of the location signals have a low RSSI, the overall signal strength of the first location may be determined to be lower than if the location signals at a different location are received from the same amount of satellites but have a higher average RSSI.

In some embodiments, the first location is a first potential location of the base station device 145 from which the base station device 145 is configured to provide location calibration information based on communication with the plurality of satellites 150 to the robotic mower 105. In some embodiments, the base station device 145 or the external device 115 utilize signal strength associated with one or more locations as the device 145, 115 is moved by a user to determine whether each location is adequate for the base station device 145 (i.e., whether a given location allows a device 145, 115 with a RTK GNSS receiver to receive location signals from an amount of satellites that is greater than or equal to a predetermined satellite amount threshold as explained in greater detail below).

In some embodiments, the electronic processor 405, 305 of the device 145, 115 being moved by the user during the initial set-up process receives a second location signal from each of a second plurality of satellites 150 and determines a signal strength of the device 145, 115 at the second location. The second location is different from the first location. The second location may be a second potential location of the base station device 145 where location calibration information based on communication with the second plurality of satellites 150 may be provided by the base station device 145 to the robotic mower 105. In such embodiments, the electronic processor 405, 305 may compare the second signal strength of the device 145, 115 at the second location to the first signal strength of the device 145, 115 at the first location to determine whether signal strength of the device 145, 115 at the first location or the second location is greater. Thus, the third electronic processor 405 may rank the first and second location based on the comparison of signal strengths. Additionally, the electronic processor 405, 305 may generate a map of the signal strengths of multiple locations with locations of within and/or nearby the operating area and/or utilize a user interface of the external device 115 to track of highest signal strength and corresponding location for comparison to a current signal strength and location as a user moves the device 145, 115 within and/or nearby the operating area 155. As is evident form the above explanation, the electronic processor 405, 305 may perform signal strength determinations (at block 510) and rankings for additional locations besides the first location and the second location.

At optional block 515, the electronic processor 405, 305 may determine common satellites from which respective first location signals were received by multiple devices within the communication system. Common satellites may be satellites of the plurality of satellites 150 that provide location signals that include the same identifier to multiple devices in the communication system 100 during the initial set-up process. For example, the multiple devices may include two of the group including the base station device 145, the external device 115, the robotic mower 105, and a second base station device. However, the below explanation will refer to the device 145, 115 being carried by the user during the initial set-up process and a robotic mower 105 that has been placed in a stationary location (at least temporarily). In some embodiments, the electronic processor 405, 305 of the device 145, 115 receives from the network interface 415, 315, data from the robotic mower 105 that indicates a second amount of satellites of the first plurality of satellites 150 from which the respective first location signals were received by the robotic mower 105 and respective second identities of each of the satellites 150 of the second amount of satellites. In such embodiments, the electronic processor 405, 305 compares first identities of each of the satellites 150 of a first amount of satellites of the first plurality of satellites 150 associated with the respective first location signals received by the device 145, 115 to the second identities of each of the satellites of the first plurality of satellites 150 associated with the respective first location signals received by the robotic mower 105 to determine a third amount of common satellites based on respective identifiers of the satellites 150. In some embodiments, the electronic processor 405, 305 determines the first signal strength of the device 145, 115 at the first location based on the third amount of common satellites of the first plurality of satellites 150 associated with the respective first location signals received by both the device 145, 115 and the robotic mower 105. In some embodiments, the electronic processor 405, 305 determines a signal strength (e.g., a signal strength level as explained previously herein) of the first location of the device 145, 115 using the amount of common satellites of the first plurality of satellites 150 associated with the respective first location signals received by both the device 145, 115 and the robotic mower 105.

At block 520, the electronic processor 405, 305 may utilize the signal strength of the first location signal of the device 145, 115 to determine whether the first location is an adequate location for the base station device 145 during operation of the robotic mower 105. For example, an adequate location is a location that enables the base station device 145 to receive location signals from a predetermined amount of satellites 150 (e.g., at least four satellites 150) with a sufficient signal strength. In some embodiments, the electronic processor 405, 305 may compare a determined signal strength of the device 145, 115 at the first location to a signal strength threshold (e.g., a predetermined amount of satellites 150 from which location signals were received). In such embodiments, the location is an adequate location of the base station device 145 if the determined signal strength of the device 145, 115 at the location is are greater than or equal to the signal strength threshold. In some embodiments, the signal strength threshold is based on the amount of common satellites (e.g., a predetermined amount of common satellites from which location signals were received by the device 145, 115 and another device such as the robotic mower 105 placed at a stationary location (at least temporarily) during the initial set-up process. For example, the signal strength threshold may be four (4) common satellites. In some embodiments, the signal strength threshold is based on a RSSI value (e.g., an average RSSI value of the location signals received by the device 145, 115).

At block 525, an output device 330, 425 is controlled based on the signal strength to output an indication of the first signal strength. In some instances, the output device 425 is integrated into the base station device 145. In some instances, the output device 330 is integrated into the external device 115. In such instances, if the base station device 145 is being used as the device that the user moves during the initial set-up process to measure signal strength at different locations, the base station device 145 may transmit, via the third network interface 415, the first signal strength to the external device 115 for outputting via the output device 330 of the external device 115. The indication of the first signal strength may signal to a user whether the location is adequate. For example, a green LED may be illuminated when a signal strength is adequate (e.g., location signals are being received from greater than or equal to a predetermined amount of satellites 150 or common satellites 150). A red LED may be illuminated when the signal strength is not adequate. Additionally, the indication may include a recommendation of a second location and/or related direction instructions (e.g., navigation instructions). In instances where the output device 330 is on the external device 115, the external device 115 may provide the indication of signal strength to a user on the second display 325.

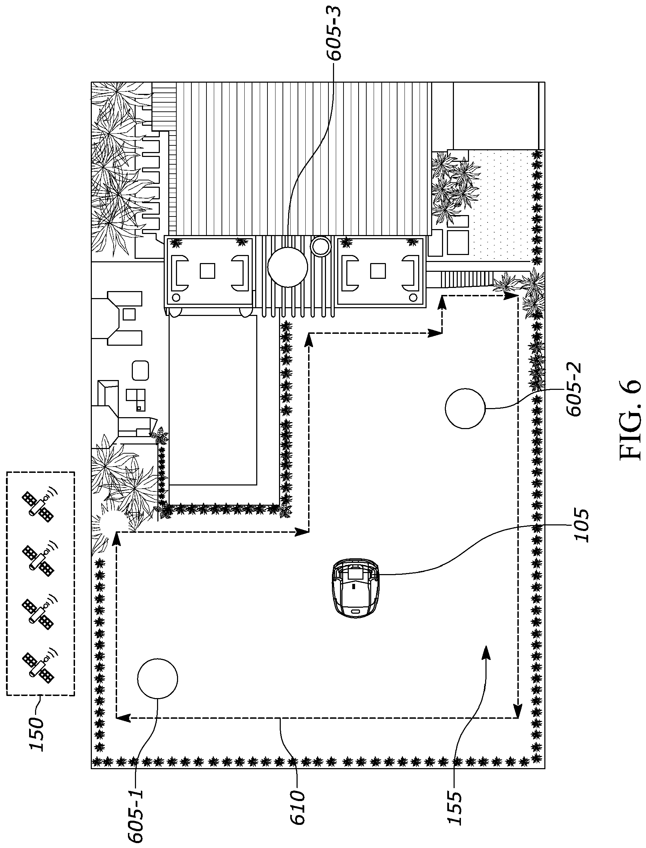

FIG. 6 is an illustration of an operating environment of the robotic mower 105. The operating environment may include the robotic mower 105, the operating area 155, a first potential location 605-1 for the base station device 145, a second potential location 605-2 for the base station device 145, a third potential location 605-3 for the base station device 145, and a virtual boundary 610. The virtual boundary 610 is illustrated as dashed line around a perimeter of the lawn that creates a virtual boundary that defines the operating area 155.

As explained previously herein, the user may carry the device 145, 115 within and/or near the operating area 155 during an initial set-up process to different example potential locations 605 for the base station device 145. The signal strength at each potential location may be calculated to determine whether each potential location is an adequate location for the base station device 145 and/or to determine which at which potential location 605 the device 145, 115 has the highest signal strength.

In some instances, the device 145, 115 that is being moved to different locations by the user during the initial set-up process may compare its signal strength to a temporarily stationary device (e.g., the robotic mower 105, another base station device 145, the external device 115, etc.) as the device 145, 115 is being moved to different locations. The device 145, 115 may also indicate (e.g., via an output device 425, 330) whether a current signal strength of the device 145, 115 at a current location is greater than that of the temporarily stationary device.

For example, the device 145, 115 may receive, via the network interface 415, 315, data from one of the robotic garden tool 105 and a second base station device 145. The data may indicate a second signal strength of the one of the robotic garden tool 105 and the second base station device 145 based on a second amount of satellites 150 of the first plurality of satellites 150 from which the respective first location signals were received by the one of the robotic garden tool 105 and the second base station device 145. The one of the robotic garden tool 105 and the second base station device 145 is located at a second location different than the first location. The second location may be a second potential location of the base station device 145 from which the base station device 145 is configured to provide the location calibration information to the robotic garden tool 105. The electronic processor 405, 305 of the device 145, 115 may be configured to compare the second signal strength of the one of the robotic garden tool 105 and the second base station device 145 at the second location to the first signal strength of the base station device 145 at the first location. The indication output by the output device 425, 330 may indicate whether the second signal strength of the one of the robotic garden tool 105 and the second base station device 145 at the second location is greater than the first signal strength of the base station device 145 at the first location.

The above example may be performed using any two devices that have a RTK GNSS receiver by placing one such device at a temporary stationary potential location of the base station device 145 and by carrying another device around the property to other potential location of the base station device 145. In some instances, when a current location has a higher signal strength than the location of the temporarily stationary device, the temporarily stationary device may be moved to the current location by the user, and the user may continue to move the other device to determine if another location has yet a higher signal strength than the location to which the temporarily stationary device was moved.

Once the user has decided which one of the potential locations of the base station device 145 to locate the base station device 145, the user may install the base station device 145 in the selected location. For example, the user may install the base station device 145 in the selected location in a semi-permanent manner such that the base station device 145 is not moved for extended periods (e.g., for a number of warm weather months when the lawn will be mowed). When installed at its semi-permanent location, the base station device 145 is configured to provide location calibration information to the robotic mower 105 to aid the robotic mower 105 in determining its location during operation as explained previously herein with respect to general RTK GNSS location tracking principles.

In some embodiments, during operation of the robotic mower 105 to perform a tasks such as mowing a lawn, the communication system 100 may include multiple base station devices 145 (e.g., a first base station device 145 and a second base station device 145). The first base station device 145 and the second base station device 145 are positioned at different locations. The first base station device 145 is a primary base station device of the multiple base station devices 145. The first base station device 145 may determine whether the first base station device 145 and/or the second base station device 145 provides calibration information to the robotic mower 105 while the robotic mower 105 moves within the operating area 155. In some embodiments, the third electronic processor 405 of the first base station device 145 receives, using the third network interface 415, data from the second base station device 145. The received data indicates a second signal strength of the second base station device 145. The second signal strength is based on a second amount of satellites of the first plurality of satellites 150 from which the respective first location signals were received by the second base station device 145. In some embodiments, the third electronic processor 405 of the first base station device 145 determines whether the first base station device 145, the second base station device 145, or both should provide respective location calibration information to the robotic mower 105 based on the first signal strength of the first base station device 145 and the second signal strength of the second base station device 145. The first signal strength may be based on a first amount of satellites of the first plurality of satellites 150. The first amount of satellites may be common to the second amount of satellites.

In some implementations, the third electronic processor 405 of the first base station device 145 compares the second signal strength of the second base station device 145 and the first signal strength of the first base station device 145 to a signal strength threshold. In some instances, the third electronic processor 405 of the first base station device 145 utilizes the base station device 145 with the signal strength that exceeds the signal strength threshold or the base station device with the higher signal strength.

In some embodiments, during operation of the robotic mower 105 to perform a tasks such as mowing a lawn, the base station device 145 is communicably coupled to at least two antennas used for RTK GNSS communication. In some instances, a first antenna may be located at the first location and a second antenna may be located at a second location different than the first location. In such instances, both antennas may be located in the same housing of the base station device 145 but pointed/oriented in different directions. In some instances, one or both antennas may be located separate from the housing of the base station device 145 but connected to an RTK GNSS receiver of the base station device 145 via a wire connected to the base station device 145. The third electronic processor 405 of the base station device 145 may determine a first signal strength that corresponds to the first signal strength of respective first location signals received by the first antenna. The third electronic processor 405 may also determine a second signal strength of the respective first location signals received by the second antenna. The third electronic processor 405 may also compare the second signal strength associated with the second antenna to the first signal strength associated with the first antenna. The third electronic processor may also provide the location calibration information to the robotic garden tool 105 where the location calibration information is based on the respective location signals received from one of the first antenna and the second antenna that has a greater signal strength than the other of the one of the first antenna and the second antenna.

The embodiments described above and illustrated in the figures are presented by way of example only and are not intended as a limitation upon the concepts and principles of the present invention. As such, it will be appreciated that various changes in the elements and their configuration and arrangement are possible without departing from the spirit and scope of the present invention.

## Claims

1. A base station device comprising:
a network interface including a global navigation satellite system (GNSS) receiver; and
an electronic processor coupled to the network interface and configured to
receive, via the GNSS receiver, a first location signal from each of a first plurality of satellites while the base station device is located at a first location, and
determine a first signal strength of the base station device at the first location, wherein the first location is a first potential location of the base station device from which the base station device is configured to provide location calibration information based on communication with the first plurality of satellites to a robotic garden tool,
wherein an indication of the first signal strength is output via an output device for consumption by a user.

2. The base station device of claim 1, further comprising the output device.

3. The base station device of claim 1, wherein the output device is included on an external device, and wherein the electronic processor is configured to transmit, via the network interface, the first signal strength to the external device for outputting via the output device.

4. The base station device of claim 1, wherein the electronic processor is configured to determine the first signal strength based on a first amount of satellites of the first plurality of satellites from which respective first location signals were received by the base station device.

5. The base station device of claim 4, wherein the electronic processor is configured to:
compare the first amount of satellites of the first plurality of satellites from which the respective first location signals were received by the base station device to a predetermined satellite amount threshold; and
determine whether the first location is an adequate location for the base station device based on the comparison,
wherein the indication of the first signal strength indicates whether the first location is an adequate location for the base station device.

6. The base station device of claim 4, wherein the electronic processor is configured to:
receive, via the network interface, data from the robotic garden tool, wherein the data indicates a second amount of satellites of the first plurality of satellites from which the respective first location signals were received by the robotic garden tool, and wherein the data indicates respective second identities of each of the satellites of the second amount of satellites;
compare first identities of each of the satellites of the first amount of satellites of the first plurality of satellites from which the respective first location signals were received by the base station device to the second identities of each of the satellites of the first plurality of satellites from which the respective first location signals were received by the robotic garden tool to determine a third amount of common satellites of the first plurality of satellites from which the respective first location signals were received by both the base station device and the robotic garden tool; and
determine the first signal strength of the base station device at the first location based on the third amount of common satellites of the first plurality of satellites from which the respective first location signals were received by both the base station device and the robotic garden tool.

7. The base station device of claim 4, wherein the electronic processor is configured to:
receive, via the network interface, data from one of the robotic garden tool and a second base station device,
wherein the data indicates a second signal strength of the one of the robotic garden tool and the second base station device based on a second amount of satellites of the first plurality of satellites from which the respective first location signals were received by the one of the robotic garden tool and the second base station device,
wherein the one of the robotic garden tool and the second base station device is located at a second location different than the first location, and
wherein the second location is a second potential location of the base station device from which the base station device is configured to provide the location calibration information to the robotic garden tool; and
compare the second signal strength of the one of the robotic garden tool and the second base station device at the second location to the first signal strength of the base station device at the first location; and
wherein the indication indicates whether the second signal strength of the one of the robotic garden tool and the second base station device at the second location is greater than the first signal strength of the base station device at the first location.

8. The base station device of claim 1, wherein the electronic processor is configured to:
receive, via the GNSS receiver, a second location signal from each of a second plurality of satellites while the base station device is located at a second location different than the first location;
determine a second signal strength of the base station device at the second location, wherein the second location is a second potential location of the base station device from which the base station device is configured to provide the location calibration information based on communication with the second plurality of satellites to the robotic garden tool;
compare the second signal strength of the base station device at the second location to the first signal strength of the base station device at the first location; and
control the output device to indicate whether the second signal strength of the base station device at the second location is greater than the first signal strength of the base station device at the first location;
and/or optionally
wherein the GNSS receiver includes a first antenna located at the first location and a second antenna located at a second location different than the first location;
wherein the first signal strength corresponds to the first signal strength of respective first location signals received by the first antenna;
wherein the electronic processor is configured to
determine a second signal strength of the respective first location signals received by the second antenna,
compare the second signal strength associated with the second antenna to the first signal strength associated with the first antenna, and
provide the location calibration information to the robotic garden tool, wherein the location calibration information is based on the respective location signals received from one of the first antenna and the second antenna that has a greater signal strength than the other of the one of the first antenna and the second antenna;
and/or optionally
wherein the electronic processor is configured to:
receive, via the network interface, data from a second base station device,
wherein the data indicates a second signal strength of the second base station device based on a second amount of satellites of the first plurality of satellites from which the respective first location signals were received by the second base station device,
wherein the second base station device is located at a second location different than the first location; and
determine whether the base station device, the second base station device, or both should provide respective location calibration information to the robotic garden tool based on the first signal strength of the base station device and the second signal strength of the second base station device,
compare the second signal strength of the second base station device to the first signal strength of the base station device, and
provide the location calibration information to the robotic garden tool, wherein the location calibration information is based on the respective location signals received from one of the first antenna and the second antenna that has a greater signal strength than the other of the one of the first antenna and the second antenna.

9. An external device comprising:
a network interface including a global navigation satellite system (GNSS) receiver;
an output device; and
an electronic processor coupled to the network interface and to the output device and configured to
receive, via the GNSS receiver, a first location signal from each of a first plurality of satellites while the external device is located at a first location,
determine a first signal strength of the external device at the first location,
wherein the first location is a first potential location of a base station device configured to provide location calibration information based on communication with the first plurality of satellites to a robotic garden tool, and
control the output device to output an indication of the first signal strength.

10. The external device of claim 9, wherein the electronic processor is configured to determine the first signal strength based on a first amount of satellites of the first plurality of satellites from which respective first location signals were received by the external device.

11. The external device of claim 10, wherein the electronic processor is configured to:
compare the first amount of satellites of the first plurality of satellites from which the respective first location signals were received by the external device to a predetermined satellite amount threshold; and
determine whether the first location is an adequate location for the base station device based on the comparison,
wherein the indication of the first signal strength indicates whether the first location is an adequate location for the base station device;
or optionally
wherein the electronic processor is configured to:
receive, via the network interface, data from the robotic garden tool, wherein the data indicates a second amount of satellites of the first plurality of satellites from which the respective first location signals were received by the robotic garden tool, and wherein the data indicates respective second identities of each of the satellites of the second amount of satellites;
compare first identities of each of the satellites of the first amount of satellites of the first plurality of satellites from which the respective first location signals were received by the external device to the second identities of each of the satellites of the first plurality of satellites from which the respective first location signals were received by the robotic garden tool to determine a third amount of common satellites of the first plurality of satellites from which the respective first location signals were received by both the external device and the robotic garden tool; and
determine the first signal strength of the external device at the first location based on the third amount of common satellites of the first plurality of satellites from which the respective first location signals were received by both the external device and the robotic garden tool;
or optionally
wherein the electronic processor is configured to:
receive, via the network interface, data from the base station device,
wherein the data indicates a second signal strength of the base station device based on a second amount of satellites of the first plurality of satellites from which the respective first location signals were received by the base station device,
wherein the base station device is located at a second location different than the first location, and
wherein the second location is a second potential location of the base station device from which the base station device is configured to provide the location calibration information to the robotic garden tool;
compare the second signal strength of the base station device at the second location to the first signal strength of the external device at the first location; and
control the output device to indicate whether the second signal strength of the base station device at the second location is greater than the first signal strength of the external device at the first location.

12. The external device of claim 9, wherein the electronic processor is configured to:
receive, via the GNSS receiver, a second location signal from each of a second plurality of satellites while the external device is located at a second location different than the first location;
determine a second signal strength of the external device at the second location, wherein the second location is a second potential location of the base station device from which the base station device is configured to provide the location calibration information based on communication with the second plurality of satellites to the robotic garden tool;
compare the second signal strength of the external device at the second location to the first signal strength of the external device at the first location; and
control the output device to indicate whether the second signal strength of the external device at the second location is greater than the first signal strength of the external device at the first location.

13. A method of controlling a base station device, the method comprising:
receiving, with an electronic processor of the base station device via a global navigation satellite system (GNSS) receiver of a network interface of the base station device, a first location signal from each of a first plurality of satellites while the base station device is located at a first location; and
determining, with the electronic processor, a first signal strength of the base station device at the first location, wherein the first location is a first potential location of the base station device from which the base station device is configured to provide location calibration information based on communication with the first plurality of satellites to a robotic garden tool;
wherein an indication of the first signal strength is output via an output device for consumption by a user.

14. The method of claim 13, further comprising:
transmitting, with the electronic processor via the network interface, the first signal strength to an external device for outputting via the output device, wherein the output device is included on the external device.

15. The method of claim 13, further comprising:
determining, with the electronic processor, the first signal strength based on a first amount of satellites of the first plurality of satellites from which respective first location signals were received by the base station device;
comparing, with the electronic processor, the first amount of satellites of the first plurality of satellites from which the respective first location signals were received by the base station device to a predetermined satellite amount threshold; and
determining, with the electronic processor, whether the first location is an adequate location for the base station device based on the comparison, wherein the indication of the first signal strength indicates whether the first location is an adequate location for the base station device;
and optionally further comprising:
receiving, with the electronic processor via the network interface, data from one of the robotic garden tool and a second base station device,
wherein the data indicates a second signal strength of the one of the robotic garden tool and a second base station device based on a second amount of satellites of the first plurality of satellites from which the respective first location signals were received by the one of the robotic garden tool and a second base station device, and
wherein the one of the robotic garden tool and a second base station device is located at a second location different than the first location;
wherein the second location is a second potential location of the base station device from which the base station device is configured to provide the location calibration information to the robotic garden tool; and
comparing, with the electronic processor, the second signal strength of the one of the robotic garden tool and the second base station device at the second location to the first signal strength of the base station device at the first location;
wherein the indication indicates whether the second signal strength of the one of the robotic garden tool and the second base station device at the second location is greater than the first signal strength of the base station device at the first location.
